# EUROPEAN PATENT SPECIFICATION

(11) **EP 1 959 023 B1**
(45) Date of publication and mention of the grant of the patent: **26.05.2010**
(21) Application number: 08150119.9
(22) Date of filing: 09.01.2008
(51) Int. Cl.: C22C 18/00, H01M 4/42, H01M 4/52, H01M 4/62, H01M 6/06, H01M 6/22

(54) **Alkaline dry battery**
Alkaline Trockenbatterie
Batterie sèche alcaline

(30) Priority: 15.01.2007 JP 2007006034
(43) Date of publication of application: 20.08.2008
(73) Proprietor: Panasonic Corporation, Kadoma-shi Osaka 571-8501 (JP)
(72) Inventor: Kato, Fumio c/o Matsushita Electric Industrial Co., Ltd., 2-1-61 Shiromi, Chuo-ku Osaka-shi Osaka 540-6207 (JP); Nunome, Jun c/o Matsushita Electric Industrial Co., Ltd., 2-1-61 Shiromi, Chuo-ku Osaka-shi Osaka 540-6207 (JP); Shimamura, Harunari c/o Matsushita Electric Industrial Co., Ltd., 2-1-61 Shiromi, Chuo-ku Osaka-shi Osaka 540-6207 (JP)
(74) Representative: Grünecker, Kinkeldey, Stockmair & Schwanhäusser Anwaltssozietät

(56) References cited:
- JP-A- 61 077 259
- JP-A- 2001 155 707
- JP-A- 2002 270 164
- JP-A- 2004 164 863
- US-A- 4 735 876
- US-A1- 2006 005 663

## Description

### BACKGROUND OF THE INVENTION

### 1. Field of the Invention

The present invention relates to an alkaline dry battery, in particular to an alkaline dry battery using zinc as a negative electrode active material and an alkaline solution as an electrolyte.

### 2. Description of Related Art

Alkaline manganese dry batteries using manganese dioxide as a positive electrode material, zinc as a negative electrode material and an alkaline solution as an electrolyte have been widely used as power sources of various devices for their great versatility and inexpensiveness. As digitization has been proceeding in recent years, alkaline dry batteries in which nickel oxyhydroxide is added to the positive electrode material for enhanced output characteristics (nickel dry batteries) is rapidly becoming popular.

In the alkaline dry battery, gas-atomized zinc powder of indefinite form is used as a negative electrode active material. As the zinc powder is easily corroded in an alkaline electrolyte and generates hydrogen gas, it may cause a rise of internal pressure of the battery and leakage of the electrolyte. Therefore, if the corrosion of zinc in the alkaline electrolyte is reduced, the resistance of the alkaline dry battery against the leakage is significantly improved.

In old times, as an anticorrosion technique, mercury is added to the negative electrode material to amalgamate the surface of the zinc powder such that hydrogen overvoltage is increased. However, in 1980 to 1990's, elimination of mercury from the alkaline dry batteries was pursued from an environmentally friendly point of view. A key technique for the mercury elimination is to use anticorrosive zinc alloy powder containing a small amount of indium, aluminum and bismuth (cf. Japanese Examined Patent Publication No. 3-71737). The zinc alloy powder of this kind is widely used still at present.

In these days, indium, which is one of the additives to the zinc alloy powder, is becoming expensive due to growing demand for use of it as a transparent conductive film of liquid crystal display devices. In general, from the viewpoint of anticorrosion, about 0.05 wt% of indium is added to the zinc alloy powder used for the alkaline dry battery. Although the addition amount is very small, cost increase is inevitable as a huge quantity of batteries are produced. Therefore, reduction of the indium content in the zinc alloy powder is urgently necessary for cost reduction. However, it has been difficult to reduce the indium content in the zinc alloy negative electrode below 0.05 wt% when taking the balance between the anticorrosion characteristic and other battery characteristics into account.

### SUMMARY OF THE INVENTION

In view of the foregoing, the present invention has been achieved. An object of the present invention is to provide alkaline dry batteries that offer a high anticorrosion characteristic and other battery characteristics in balance even if the indium content is reduced.

In order to achieve the object, a first alkaline dry battery is defined in current claim 1.

A second alkaline dry battery of the present invention is defined in current claim 4.

A third alkaline dry battery of the present invention is defined in current claim 7.

According to the present invention, the aluminum content in the zinc alloy powder is increased to 0.008 wt% to 0.02 wt% both inclusive and the content of the cross-linked water-absorbing polyacrylate polymer used as the gelling agent of the gelled alkaline electrolyte is adjusted in the range of 0.5 wt% to 3 wt% both inclusive. This ensures the anticorrosion characteristic of the negative electrode even if the indium content in the zinc alloy of the negative electrode is reduced below 0.015 wt%.

### BRIEF DESCRIPTION OF THE DRAWINGS

FIG. **1** is a partial sectional front view of an alkaline dry battery according to an embodiment of the present invention.
FIG. **2** is a schematic sectional view of a gas generation measurement device used in a preliminary experiment to measure gas generation speed of a zinc negative electrode.
FIG. **3** is a graph illustrating a voltage drop characteristic of AA alkaline dry batteries according to the embodiment of the present invention when the batteries are subjected to continuous discharge under a load of 300 Ω at 0 °C.
FIG. **4** is a graph illustrating a voltage drop characteristic of short-life AA alkaline dry batteries when the batteries are subjected to continuous discharge under a load of 300 Ω at 0 °C.

### DETAILED DESCRIPTION OF THE INVENTION

Before the explanation of an embodiment of the present invention, a study made by the inventors of the present invention will be explained first.

For the reduction of production cost of the alkaline dry battery as described above, the inventors of the present invention have repeated experiments on the alloy composition of the negative electrode and components of the alkaline electrolyte to reduce the amount of indium, which has been added in an amount of about 0.05 wt% relative to the zinc alloy negative electrode. As a result, they have found that the anticorrosion characteristic is ensured even if the zinc alloy containing a reduced amount of indium is used as the negative electrode material by increasing the amount of aluminum added to the zinc alloy together with indium more than the general composition (0.003 to 0.006 wt%) and optimizing the amount of a gelling agent in a gelled alkaline electrolyte.

Unfortunately, the battery in which the zinc alloy powder contains an increased amount of aluminum caused internal short circuit when it was discharged at low rate in temperature atmosphere lower than room temperature. The inventors were the first to find the drawback. The discharge at low rate and low temperature atmosphere occurs, for example, when the battery is applied to a headlight used continuously outside in wintertime or when it is used for a battery-powered refrigerant deodorant.

When the conventional mercury-free zinc negative electrode is used, the internal short circuit occurs in a discharge period at low rate and room temperature as disclosed by Japanese Patent Publication No. 3310935, Japanese Unexamined Patent Publication No. 2001-155707, Published Japanese Translation of PCT Application No. 2002-511638 and Japanese Unexamined Patent Publication No. 2004-164863. A cause of the internal short circuit is needle crystal of zinc oxide generated in the separator when the battery using the conventional mercury free zinc negative electrode is discharged at low rate and room temperature. The mechanism of this phenomenon is disclosed by the above-mentioned four patent literatures. In contrast, the battery using the zinc alloy powder containing an increased amount of aluminum does not cause the internal short circuit even when it is discharged in room temperature atmosphere (20 °C).

As a solution to the internal short circuit caused during the discharge in room temperature atmosphere, Japanese Patent Publication No. 3310935 and Japanese Unexamined Patent Publication No. 2001-155707 disclose optimization of fibrous material and air resistance (air permeability) of the separator (nonwoven fabric). Further, Published Japanese Translation of PCT Application No. 2002-511638 and Japanese Unexamined Patent Publication No. 2004-164863 disclose another solution of using a cellophane film as part of the separator. However, none of the four patent literatures has any description and suggestion as to the internal short circuit in the low temperature atmosphere newly discovered by the inventors of the present invention. As a matter of course, the mechanism of the phenomenon and measures to be taken are not described or suggested at all.

The inventors of the present invention have made a close study on the newly found problem, i.e., the internal short circuit in the discharge period at low rate and low temperature, and have found the following presumable mechanism.

At low temperature, zincate ions show low solubility to the alkaline electrolyte. When the low rate discharge is continued in this environment, the zincate ions produced by the reaction of the following chemical formula (2) are continuously supplied to the electrolyte to supersaturate the electrolyte. As a result, redeposition of the zincate ions occurs as expressed by the chemical formula (3). In the battery using the zinc alloy powder containing a large amount of aluminum, a protective aluminum oxide layer is densely formed on the surfaces of the zinc powder particles. Therefore, the zincate ions are less likely to redeposit on the zinc powder (negative electrode). Instead, zinc oxide as a semiconductor is redeposited on the separator. This seems to be a cause of the internal short circuit.

### <Discharge reaction of negative electrode>

Zn + 2OH⁻ → ZnO + H₂O +2e⁻ (1)

Zn + 4OH⁻ → Zn(OH)₄²⁻ + 2e⁻ (2)

### <Redeposition>

Zn(OH)₄²⁻→ ZnO + H₂O + 2OH⁻ (3)

Based on the presumed mechanism, the inventors of the present invention have conducted a study on the thickness of a nonwoven fabric separator. As a result, they have found that zinc oxide redeposited on separator fibers in the discharge period at low rate and low temperature, if any, does not penetrate into the positive and negative electrodes to cause the internal short circuit as long as the total thickness of the nonwoven fabric separator is not smaller than a certain thickness. However, it has also been found that the nonwoven fabric separator exceeding the certain thickness has adverse effect on high rate pulse discharge. In view of the foregoing, according to an embodiment of the present invention, one or more nonwoven fabric sheets are used as the separator and the total thickness of the separator is controlled within a certain range to solve the problem of the internal short circuit and ensure the discharge characteristics.

In an alkaline dry battery according to an embodiment of the present invention, the negative electrode contains a zinc alloy as a negative electrode active material and a gelled alkaline electrolyte as a dispersion medium for dispersing the negative electrode active material. The zinc alloy contains 0.0001 wt% to 0.015 wt% both inclusive of indium and 0.008 wt% to 0.02 wt% both inclusive of aluminum. The gelled alkaline electrolyte contains 0.5 wt% to 3 wt% both inclusive of a cross-linked water-absorbing polyacrylate polymer as a gelling agent.

With the indium content in the zinc alloy adjusted to 0.015 wt% or less, significant cost reduction is expected. The reason why the lower limit of the indium content is set to 0.0001 wt% or more is that 0.0001 wt% or more of indium is inevitably contained in the zinc alloy as impurities derived from a zinc ingot even if metal indium is not added in the industrial production of the zinc alloy. The aluminum content in the zinc alloy controlled to 0.008 wt% or more provides high anticorrosion effect. The adverse effect on the high rate discharge characteristic by aluminum is prevented by setting the aluminum content to 0.02 wt% or less. Further, since the aluminum content in the zinc alloy is adjusted to 0.008 wt% or more, the amount of indium contained in the zinc alloy to ensure the anticorrosion characteristic can significantly be reduced. From the cost effectiveness, the indium content is preferably set to less than 0.01 wt%, more preferably 0.005 wt% or less.

A mechanism of the anticorrosion of the zinc alloy containing an increased amount of aluminum is based on aluminum (aluminum ions) which has leached out of the zinc alloy to the electrolyte and become aluminum oxide to form a protective aluminum oxide layer on the surface of the zinc alloy. For this reason, it is not presumed that the anticorrosion effect is suitably obtained in a system in which the viscosity of a dispersion medium for the negative electrode (gelled electrolyte) is low and leached aluminum is easily dispersed from the zinc surface. In this point of view, it is important to keep the viscosity of the dispersion medium, in particular the ratio of a cross-linked water-absorbing polyacrylate polymer contained in the gelled alkaline electrolyte, within an appropriate range.

If the content of the cross-linked water-absorbing polyacrylate polymer as the gelling agent in the gelled alkaline electrolyte is set to 0.5 wt% or more, the resulting solution becomes viscous to an adequate degree and the protective aluminum oxide layer is suitably formed on the zinc surface. This offers sufficient anticorrosion effect. Further, if the content of the cross-linked water-absorbing polyacrylate polymer in the gelled alkaline electrolyte is adjusted to 3 wt% or less, the alkaline electrolyte is prevented from becoming excessively viscous and the battery production is achieved with stability. The cross-linked water-absorbing polyacrylate polymer may be, for example, cross-linked polyacrylate or cross-linked sodium polyacrylate.

The separator is preferably made of nonwoven fabric. In view of alkaline electrolyte absorption, strength and stability, the nonwoven fabric is preferably a bicomponent fiber material, such as vinylon-Lyocell^{®}, vinylon-rayon and vinylon-mercerized pulp bicomponent fibers. These bicomponent fibers can be manufactured into a sheet of about 100-250 µm thick. If the separator is made of the nonwoven fabric only, a single nonwoven fabric sheet or a stack of multiple nonwoven fabric sheets is used.

If the separator is made of one or more nonwoven fabric sheets only, the nonwoven fabric sheet preferably has air permeability of 0.5 mL/cm²·sec to 5 mL/cm²·sec both inclusive measured in the state of use in the battery (a single sheet or a stack of sheets). The air permeability mentioned herein is Frajour air permeability. The Frajour air permeability is a parameter measured by a test according to JIS L1096.8.27.1.A and reflects the size of gaps between separator fibers, isolation between the positive and negative electrodes and diffusibility of the electrolyte (or of ions dissolved therein) in the separator.

When the nonwoven fabric sheet having air permeability of 5 mL/cm²·sec or less measured in the state of use in the battery is used, the isolation between the positive and negative electrodes is sufficiently ensured. Therefore, zinc oxide redeposited on the separator fibers in the discharge period at low rate and low temperature, if any, does not penetrate into the positive and negative electrodes and the internal short circuit does not occur. If a stack of multiple nonwoven fabric sheets has air permeability of 0.5 mL/cm²·sec or more, the diffusibility of the electrolyte in the separator is ensured to a sufficient degree. Thus, excellent high rate pulse characteristic is maintained.

The separator may be made of a stack of the nonwoven fabric sheet and a cellophane film. The use of the cellophane film in the separator makes it possible to solve the problem of the internal short circuit that is likely to occur in the discharge period at low rate and low temperature when the zinc alloy powder containing an increased amount of aluminum and a reduced amount of indium is used. In this case, the existence of the nonwoven fabric sheet ensures the mechanical strength of the separator.

The cellophane film preferably has a tensile strength of 30N/15mm or more measured in dry state. The tensile strength of the cellophane film varies depending on the direction of tension applied thereto. According to the present invention, the cellophane film preferably has the tensile strength of 30N/15mm or more against tension applied in the direction most vulnerable to the tension. The tensile strength is a parameter measured by a method according to JIS P8113 and one of indices of mechanical strength of the film. Regarding the film formation direction of the cellophane film as a longitudinal direction and the width direction as a lateral direction, the cellophane film shows lower tensile strength in the lateral direction than in the longitudinal direction. Therefore, the tensile strength in the lateral direction is a key to complete prevention of the physical penetration of zinc oxide. The cellophane film with sufficient strength is obtained as long as the tensile strength in the lateral direction is 30N/15mm or more. This makes it possible to completely prevent the zinc oxide crystal redeposited on the nonwoven fabric sheet in the discharge period at low rate and low temperature from penetrating into the positive and negative electrodes.

As the separator, a stack of the nonwoven fabric sheet and a hydrophilic microporous polyolefin film may be used. Also in this case, the existence of the nonwoven fabric sheet ensures the mechanical strength of the separator. The hydrophilic microporous polyolefin film is a film prepared by adding a hydrophilic group to a microporous polyolefin film (base material) through a chemical reaction (hydrophilization) and has uniform micropores of several hundred nm inherent to the base material and excellent wettability to an aqueous solution. To prepare the microporous polyolefin film as the the base material, high-molecular-weight polyolefin and a filler are mixed and shaped into a sheet and the filler is extracted out to obtain a microporous polyolefin film. Then, the resulting film is drawn and heated to provide multiple uniform micropores of several hundred nm.

The use of the hydrophilic microporous polyolefin film in the separator makes it possible to solve the problem of the internal short circuit that is likely to occur in the discharge period at low rate and low temperature when the zinc alloy powder containing an increased amount of aluminum and a reduced amount of indium is used. The hydrophilic microporous polyolefin film may be, for example, a polyethylene film graft-polymerized with acrylic acid and a sulfonated microporous polyethylene film.

The hydrophilic microporous polyolefin film preferably has a tensile strength of 30N/15mm or more measured in dry state before assembling into the battery. Just as applied to the cellophane film, the tensile strength is a value against tension applied in the direction most vulnerable to the tension. Sufficient strength is obtained as long as the tensile strength of the hydrophilic microporous polyolefin film is 30N/15mm or more. This makes it possible to completely prevent the zinc oxide crystal redeposited on the nonwoven fabric sheet in the discharge period at low rate and low temperature from penetrating into the positive and negative electrodes.

Although the cellophane film and the hydrophilic microporous polyolefin film have ion permeability, the diameter of the pores is as extremely small as several nm to several hundred nm. Therefore, the redeposition of zinc oxide is less likely to occur in the pores of the films and needle crystal (about 1 µm) of zinc oxide redeposited on the nonwoven fabric sheet is prevented from penetrating into the positive and negative electrodes. Thus, an alkaline dry battery configured as described above sufficiently ensures the anticorrosion characteristic of the zinc alloy powder and solves the problem of the internal short circuit that occurs in the discharge period at low rate and low temperature.

The zinc alloy preferably contains 0.005 wt% to 0.03 wt% both inclusive of bismuth. Bismuth added to the zinc alloy offers the anticorrosion effect just like indium and aluminum. With the bismuth content in the zinc alloy controlled to 0.005 wt% or more, resistance to leakage is enhanced to a greater extent. Further, the adverse effect on the high rate discharge characteristic caused by bismuth is prevented by setting the bismuth content in the zinc alloy to 0.03 wt% or less.

In general, the positive electrode uses electrolytic manganese dioxide by itself or a mixture of electrolytic manganese dioxide and nickel oxyhydroxide as the positive electrode active material. In this case, the content of sodium ions and sulfate ions, both of which are contained as impurities in electrolytic manganese dioxide, are preferably set to 0.5 wt% or less and 1.5 wt% or less, respectively. Electrolytic manganese dioxide is synthesized by electrolyzing manganese sulfate in a sulfuric acid bath and subjected to neutralization with a sodium hydroxide solution before pulverization. Therefore, electrolytic manganese dioxide inherently contains the sodium and sulfate ions as the impurities.

If the sodium ion content in electrolytic manganese dioxide is high, the sodium ions leach into a KOH-based electrolyte in the battery and the activity of hydroxide ions is decreased, thereby decreasing the solubility of zinc oxide to the electrolyte. Further, if the sulfate ion content is high, residues of protons mixed as counter ions decrease the alkali concentration of the electrolyte (hydroxide ion concentration). Also in this case, the solubility of zinc oxide to the electrolyte is decreased. In this situation, internal short circuit is likely to occur due to redeposition of zinc oxide in the discharge period at low rate and low temperature. For this reason, the lower the sodium and sulfate ion contents in the electrolytic manganese dioxide are, the more preferable it is. If the sodium and sulfate ions contained in the electrolytic manganese dioxide as the impurities are controlled to 0.5 wt% or less and 1.5 wt% or less, respectively, the internal short circuit is effectively restrained.

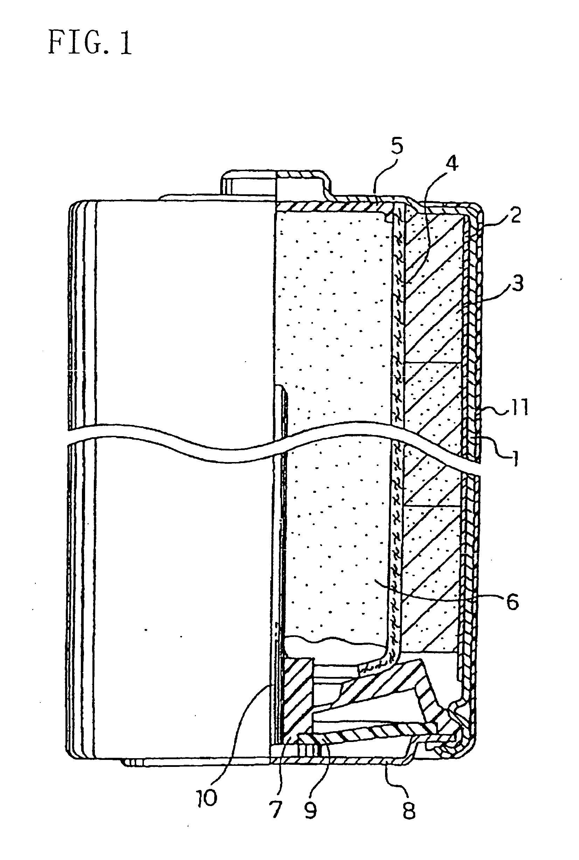

Now, an alkaline dry battery as an embodiment of the present invention will be explained. As shown in FIG. **1****,** the alkaline dry battery includes positive electrode mixture pellets **3** and a gelled negative electrode **6.** The positive electrode mixture pellets **3** and the gelled negative electrode **6** are isolated from each other by a separator **4.** A positive electrode case **1** is made of a nickel-plated steel plate. A graphite coating **2** is provided inside the positive electrode case **1.**

The alkaline dry battery shown in FIG. **1** is fabricated in the following manner. First, multiple hollow cylindrical positive electrode mixture pellets **3** containing a positive electrode active material such as manganese dioxide are placed in the positive electrode case **1** and pressurized to bring them into close contact with the inner surface of the positive electrode case **1.** Then, the separator **4** wound in a cylindrical form and an insulating cap **5** are placed inside the positive electrode mixture pellets **3** and an electrolyte is poured therein to wet the separator **4** and the positive electrode mixture pellets **3.** After the pouring, the gelled negative electrode **6** is introduced to fill the inside of the separator **4.** The gelled negative electrode **6** is prepared in advance by mixing and dispersing zinc alloy powder used as a negative electrode active material into a gelled alkaline electrolyte (dispersion medium). Subsequently, a negative electrode collector **10** integrated with a resin sealing **7,** a bottom plate **8** serving as a negative electrode terminal and an insulating washer **9** is inserted into the gelled negative electrode **6**. Then, an open end of the positive electrode case **1** is crimped onto the rim of the bottom plate **8** with an edge of the sealing **7** interposed therebetween such that the open end of the positive electrode case **1** is brought into close contact with the bottom plate **8.** Finally, an outer label **11** is wrapped onto the outer surface of the positive electrode case **1.** Thus, the alkaline dry batter of the present embodiment is obtained.

Hereinafter, examples of the present invention will be described in detail. The present invention is not limited to the examples.

### [Examples]

### (Preliminary experiment)

A preliminary experiment was performed to ascertain the degree of gas generation due to corrosion of the zinc alloy powder containing a reduced amount of indium.

A zinc ingot of 99.99 % purity or more was fused at a temperature higher than 500 °C. Additive elements were added thereto in the composition ratio shown in Table 1 and the mixture was uniformly fused to obtain a liquid zinc alloy. Then, the liquid zinc alloy was powdered by spraying (atomizing) using high pressure gas to obtain zinc alloy powder. The obtained zinc alloy powder was sifted to be classified into (1) 35-300 mesh powder (the ratio of fine powder of 75 µm or less: 25 %) and (2) 35-200 mesh powder (the ratio of fine powder of 75 µm or less: 5 %). In this manner, negative electrode active materials were obtained. Indium in an amount of 0.0001 wt% was not positively added but contained as an impurity.

**Table 1**

| NEGATIVE ELECTRODE ACTIVE MATERIAL | CONTENTS OF ADDITIVES IN ZINC ALLOY [wt%] | | | PARTICLE SIZE |
|---|---|---|---|---|
| | Al | Bi | In | |
| X-(1) | 0.006 | 0. 012 | 0.0001 | 35~300 MESH (-75 µm FINE POWDER:25%) |
| X- (2) | | | | 35~200 MESH (-75 µm FINE POWDER:5%) |
| Y-(1) | 0.010 | 0.012 | 0.0001 | 35~300 MESH (-75µm FINE POWDER:25%) |
| Y-(2) | | | | 35~200 MESH (-75 µm FINE POWDER:5%) |
| Z-(1) | 0.020 | 0.012 | 0.0001 | 35~300 MESH (-75 µm FINE POWDER:25%) |
| Z-(2) | | | | 35~200 MESH (-75 µm FINE POWDER:5%) |

A 36 wt% potassium hydroxide solution (containing 2 Wt% of zinc oxide) was prepared as an alkaline electrolyte. Cross-linked polyacrylate was added to the alkaline electrolyte to prepare 6 kinds of gelled alkaline electrolytes containing 0.3 wt%, 0.5 wt%, 1 wt%, 2 wt%, 3wt% and 3.5 wt% of cross-linked polyacrylate relative to the total amount, respectively. The obtained gelled electrolytes were left to stand for 24 hours to be aged enough. Cross-linked polyacrylate used herein was "JUNLON PW-150" manufactured by NIHON JUNYAKU Co., Ltd.

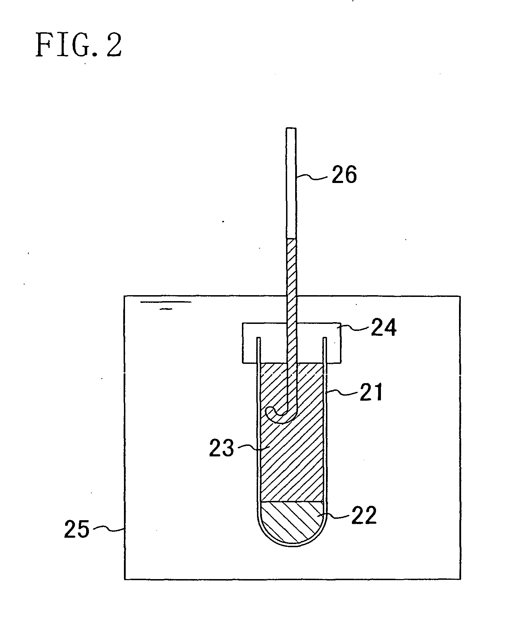

Using the negative electrode active materials shown in Table 1 together with dispersion media, i.e., a 36 wt% potassium hydroxide solution (containing 2 wt% zinc oxide) to which the gelling agent was not added and the six gelled alkaline electrolytes, gas generation by the zinc negative electrode was inspected. Each of the negative electrode active materials and each of the dispersion media was mixed and stirred in the ratio of 1.8:1.0 by weight to prepare 42 kinds of zinc negative electrodes. Then, as shown in FIG. **2****,** a zinc negative electrode **22** (weight: 10.0 g) was placed in a test tube **21,** which was filled with liquid paraffin **23** and sealed with a silicone rubber cap **24.** This was maintained at 45 °C in a thermobath **25** to let the zinc negative electrode generate gas. The top surface of the liquid paraffin **23** rising in a pipette **26** was read on scales on the pipette **26**, thereby determining the gas generation speed. Further, an 8 mm-diameter syringe was used to suck up and extrude the zinc negative electrode 10 times to judge whether the suction and extrusion were easy or not. This was performed as a negative electrode filling test (test to judge whether the filling of the negative electrode material is easy or not in an actual manufacturing process).

Table 2 shows the average gas generation speed [*L/g·day] of each zinc negative electrode at 45 °C for 1 week and the results of the filling test.

**Table 2**

| | | RATIO OF CROSS-LINKED SODIUM POLYACRYLATE CONTENT IN DISPERSION MEDIUM [wt%] | | | | | | | | | | | | | |
|---|---|---|---|---|---|---|---|---|---|---|---|---|---|---|---|
| | | 0 | | 0.3 | | 0.5 | | 1 | | 2 | | 3 | | 3.5 | |
| | | (ELECTROLYTE ONLY) | | (GELLED ELECTROLYTE) | | | | | | | | | | | |
| NEGATIVE ELECTRODE ACTIVE MATERIAL | X-(1) | 35 | -- | 23 | ○ | 15 | ○ | 12 | ○ | 10 | ○ | 10 | ○ | 8 | × |
| | X-(2) | 20 | -- | 14 | ○ | 11 | ○ | 9 | ○ | 9 | ○ | 8 | ○ | 8 | × |
| | Y-(1) | 31 | -- | 9 | ○ | 2 | ○ | 2 | ○ | 1.5 | ○ | 1 | ○ | 1 | × |
| | Y-(2) | 19 | -- | 7 | ○ | 2 | ○ | 1.5 | ○ | 1 | ○ | 1 | ○ | 1 | × |
| | Z-(1) | 32 | -- | 8 | ○ | 1.5 | ○ | 1.5 | ○ | 1 | ○ | 1 | ○ | 1 | × |
| | Z-(2) | 18 | -- | 7 | ○ | 1.5 | ○ | 1 | ○ | 1 | ○ | 1 | ○ | 1 | × |

| | | | | | | | | | | | | | | | |
|---|---|---|---|---|---|---|---|---|---|---|---|---|---|---|---|
| NUMERIC VALUE···GAS GENERATION SPEED OF NEGATIVE ELECTRODE [µL/g·day] SYMBOL···RESULT OF FILLING TEST → ○: FINE, × : DIFFICULT TO FILL, -: NOT EVALUATED | | | | | | | | | | | | | | | |

Irrespective of the kind of the negative electrode active material (zinc alloy), the gas generation speed was reduced as the cross-linked polyacrylate content in the dispersion medium was increased. It is assumed that when the cross-linked polyacrylate content is high, the gelled electrolyte becomes more viscous to retard the migration and dispersion of ions. Therefore, aluminum leached out of the zinc alloy stays around the surface of the zinc alloy powder to form an anticorrosion protective layer of aluminum oxide on the surface of the zinc alloy powder. This phenomenon occurred remarkably on the negative electrode active materials Y-(1), Y-(2), Z-(1) and Z-(2) in which the aluminum content in the zinc alloy was as high as 0.01 or 0.02 wt%. When the cross-linked polyacrylate content was 0.5 wt% or more, irrespective of the particle sizes (1) and (2), the gas generation speed was reduced to 2 µL/g·day or less, a level that does not present any problems for the actual battery design.

The filling characteristic of the zinc negative electrode was favorable as long as the cross-linked polyacrylate content was 3 wt% or less. When the content was 3.5 wt%, however, the viscosity was increased too much and the suction and extrusion using the syringe was difficult.

The above-described results revealed that when the zinc alloy powder containing a reduced amount of indium (or indium free zinc alloy powder) is used, it is effective to increase the aluminum content in the zinc alloy and adjust the cross-linked polyacrylate content in the range of 0.5 to 3 wt%.

### (Example 1)

Based on the results of the preliminary experiment, evaluation was carried out on batteries using various kinds of zinc alloy powder containing aluminum and indium in different amounts.

A zinc ingot of 99.99 % purity or more was fused at a temperature higher than 500 °C. Additive elements were added thereto in the composition ratio shown in Table 3 and the mixture was uniformly fused to obtain a liquid zinc alloy. Then, the liquid zinc alloy was powdered by spraying (atomizing) using high pressure gas to obtain zinc alloy powder. The obtained zinc alloy powder was sifted to obtain 35-300 mesh powder (the ratio of fine powder of 75 µm or less: 25 %). In this manner, negative electrode active materials a to r were obtained.

**Table 3**

| NEGATIVE ELECTRODE ACTIVE MATERIAL | CONTENTS OF ADDITIVES IN ZINC ALLOY [wt%] | | |
|---|---|---|---|
| | Al | Bi | In |
| a | 0.006 | 0.012 | 0.050 |
| b | 0.006 | 0.012 | 0.020 |
| c | 0.006 | 0.012 | 0.015 |
| d | 0.006 | 0.012 | 0.010 |
| e | 0.006 | 0.012 | 0.0001 |
| f | 0.008 | 0.012 | 0.015 |
| g | 0.008 | 0.012 | 0.010 |
| h | 0.008 | 0.012 | 0.0001 |
| i | 0.010 | 0.012 | 0.015 |
| j | 0.010 | 0.012 | 0.010 |
| k | 0.010 | 0.012 | 0.005 |
| I | 0.010 | 0.012 | 0.0001 |
| m | 0.020 | 0.012 | 0.015 |
| n | 0.020 | 0.012 | 0.010 |
| o | 0.020 | 0.012 | 0.0001 |
| p | 0.025 | 0.012 | 0.015 |
| q | 0.025 | 0.012 | 0.010 |
| r | 0.025 | 0.012 | 0.0001 |

A 36 wt% potassium hydroxide solution (containing 2 wt% of zinc oxide) was prepared as an alkaline electrolyte. Cross-linked polyacrylate was added and mixed to the alkaline electrolyte to prepare a gelled alkaline electrolyte containing 1.5 wt% of cross-linked polyacrylate relative to the total amount. The gelled electrolyte was left to stand for 24 hours to be aged enough. Cross-linked polyacrylate used herein was "JUNLON PW-150" manufactured by NIHON JUNYAKU Co., Ltd. To a predetermined amount of the gelled electrolyte, each of the negative electrode active materials in an amount of 1.8-times by weight was added and sufficiently mixed to prepare gelled negative electrodes based on the different negative electrode active materials, respectively.

Then, AA alkaline dry batteries were fabricated.

A positive electrode was fabricated in the following manner. First, electrolytic manganese dioxide and graphite were mixed in the ratio of 94:6 by weight. Then, to 100 parts by weight of the powder mixture, 1 part by weight of electrolyte (a 36 wt% potassium hydroxide solution containing 2 wt% of ZnO) was mixed and stirred uniformly using a mixer to make the particle size uniform. Then, the obtained particles are pressed into a hollow cylindrical form to obtain positive electrode mixture pellets. Electrolytic manganese dioxide used was HH-TF (sodium ions as impurities: 0.3 wt% and sulfate ions: 1.3 wt%) manufactured by Tosoh Corporation and graphite used was SP-20 manufactured by Nippon Graphite Industries, ltd.

The separator was made of Vinylon-Lyocell composite nonwoven fabric manufactured by Kuraray (thickness of a sheet: 150 µm). The separator was prepared as a stack of three nonwoven fabric sheets (structure 1) or a stack of two nonwoven fabric sheets (structure 2) and inserted in the positive electrode mixture pellets together with an insulating cap.

The positive electrode mixture pellets, the gelled negative electrode and the separator were combined and an electrolyte (a 36 wt% potassium hydroxide solution containing 2 wt% of ZnO) was poured thereto. In this manner, AA alkaline dry batteries A1-R1 and A2-R2 (36 kinds) based on different negative electrode active materials and separators, respectively, were obtained.

The 36 kinds of alkaline dry batteries were subjected to the following evaluation tests (i) to (iii). The test results are shown in Table 4.

### (i) Leakage resistance test

20 pieces of each kind of the obtained batteries were stored in an environment at 60 °C and 90% RH for one month. Then, the number of leaked batteries was counted as the rate of leakage (%).

### (ii) Low rate discharge test

Low rate discharge test was carried out under different conditions (a) to (d). Among n pieces of each kind of the prepared batteries subjected to the test (n = 10), the number of short-life batteries which finished discharge before reaching 2/3 of a predetermined duration was counted.
(a) A single battery was connected to a 75 Ω resistance and continuously discharged in 20 °C atmosphere to an end voltage of 0.9 V.
(b) A single battery was connected to a 1.2 kΩ resistance and continuously discharged in 20 °C atmosphere to an end voltage of 0.9 V.
(c) A single battery was connected to a 3.9 Ω resistance and intermittently discharged every 5 minutes/12 hours in 20 °C atmosphere to an end voltage of 0.9 V.
(d) A single battery was connected to a 300 Ω resistance and continuously discharged in 0 °C atmosphere to an end voltage of 1.0 V.

### (iii) High rate discharge test

One of each kind of the prepared batteries was continuously discharged at a constant voltage of 1000 mW in 20 °C atmosphere to measure discharge duration until the battery voltage reaches 0.9 V. The results shown in Table 4 indicate average values among n pieces of batteries (n = 3) relative to the discharge duration of batteries A1 standardized as 100.

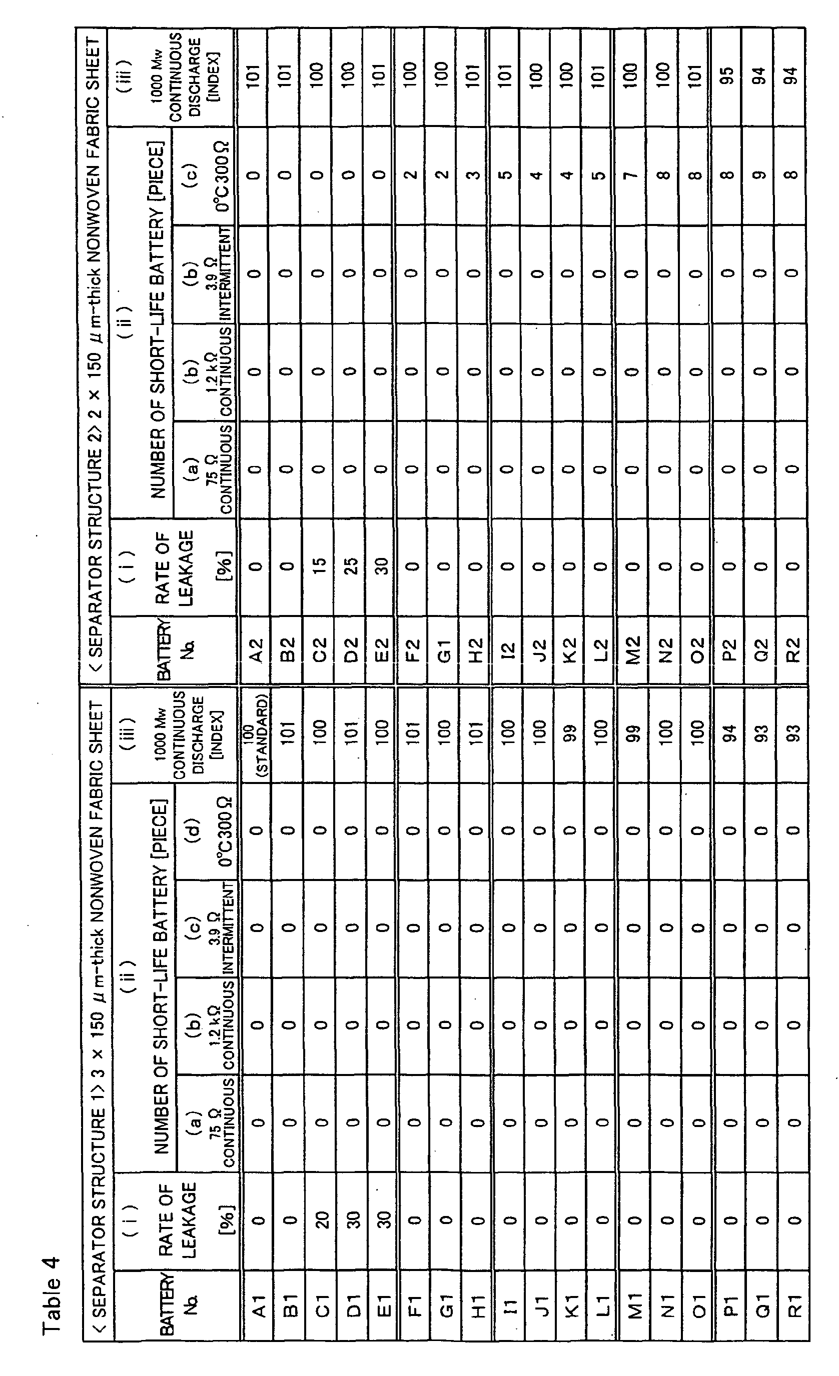

The results of the leakage resistance test (i) will be explained in detail. Among batteries A1-E1 and A2-E2 in which the aluminum content in the zinc alloy was 0.006 wt%, leakage occurred in batteries C1-E1 and C2-E2 in which the indium content in the zinc alloy was 0.015 wt% or less. On the other hand, the leakage did not occur in batteries F1-S1 and F2-S2 in which the aluminum content in the zinc alloy was 0.008 wt% or more even if the indium amount was 0.015 wt% or less. Presumably, this reflects the results of the preliminary gas generation test (Table 2) that the active materials X-(1) and X-(2) containing 0.006 wt% of aluminum generated the gas at higher speed, while the gas generation by the active materials Y-(1), Y-(2), Z-(1) and Z-(2) containing an increased amount of aluminum were sufficiently restrained by using highly viscous gelled electrolyte.

When the aluminum content in the zinc alloy was 0.008 wt% or more, a sufficiently large amount of aluminum leached out of the zinc alloy to the electrolyte. As the cross-linked sodium polyacrylate content in the electrolyte was as high as 1.5 wt%, the viscosity of the gelled electrolyte was sufficiently high. In this situation, it is presumed that aluminum leached out of the zinc alloy did not diffuse into the electrolyte, but stayed around the surface of the zinc alloy powder to form an anticorrosion protective layer of aluminum oxide on the surface of the zinc alloy powder.

To confirm whether the presumption is correct or not, batteries A2-R2 (non-discharged) are disassembled to take the zinc negative electrodes out. After elaborate wash and vacuum drying, the obtained zinc alloy powder was subjected to acid dissolution and composition analysis using an ICP optical emission spectrometer (VISTA-RL, VARIAN). The results are shown in Table 5.

**Table 5**

| BATTERY No. | CONTENTS OF ADDITIVES IN ZINC ALLOY EXTRACTED FROM BATTERY (NEGATIVE ELECTRODE) AND WATER-WASHED [wt%] | | | RATE OF ALUMINUM LEACHED IN GELLED ELECTROLYTE [wt%] |
|---|---|---|---|---|
| | Al | Bi | In | |
| A2 | 0.0031 | 0.0121 | 0.051 | 0.0029 |
| B2 | 0.0028 | 0.0119 | 0.020 | 0.0032 |
| C2 | 0.0030 | 0.0119 | 0.0151 | 0.0030 |
| D2 | 0.0028 | 0.0120 | 0.0099 | 0.0032 |
| E2 | 0.0029 | 0.0121 | 0.0001 | 0.0031 |
| F2 | 0.0039 | 0.0118 | 0.0150 | 0.0041 |
| G1 | 0.0040 | 0.0120 | 0.0101 | 0.0040 |
| H2 | 0.0040 | 0.0121 | 0.0001 | 0.0040 |
| I2 | 0.0052 | 0.0119 | 0.0149 | 0.0048 |
| J2 | 0.0048 | 0.0118 | 0.0102 | 0.0052 |
| K2 | 0.0050 | 0.0121 | 0.0051 | 0.0050 |
| L2 | 0.0049 | 0.0120 | 0.0001 | 0.0051 |
| M2 | 0.0099 | 0.0121 | 0.0151 | 0.0101 |
| N2 | 0.0103 | 0.0121 | 0.0102 | 0.0097 |
| 02 | 0.0101 | 0.0118 | 0.0001 | 0.0099 |
| P2 | 0.0122 | 0.0119 | 0.0150 | 0.0128 |
| Q2 | 0.0127 | 0.0120 | 0.0102 | 0.0123 |
| R2 | 0.0126 | 0.0122 | 0.0001 | 0.0124 |

In any of the batteries, the aluminum content in the negative electrode active material (zinc alloy powder) was reduced by about half of that in the original negative electrode active materials (a-r), while the contents of bismuth and indium were almost unchanged. As it has been confirmed by elemental mapping (EPMA) on the section of zinc alloy powder particles that a large amount of aluminum stays on the outermost surface of the particles, it is assumed that aluminum on the particle surface leaches into the gelled electrolyte. Although a direct evidence of the formation of the protective oxide layer by leached aluminum has not been found yet, it is considered that a highly anticorrosive protective layer is formed when the content of "aluminum leached into the gelled electrolyte" shown in Table 5 reaches 0.004 wt% or more. The thus formed protective aluminum (aluminum oxide) layer is presumably washed away when the negative electrode is washed before the composition analysis of Table 5.

Next, the results of the low rate discharge test (ii) will be described. Every cell had no problems under the discharge conditions (a)-(c) in 20 °C atmosphere, in which it had been reported that the battery goes dead soon. Under the discharge condition (d) of 0°C and 300 Ω, however, batteries F2-S2 in which the aluminum content in the zinc alloy was 0.008 wt% or more and the 2-ply nonwoven fabric separator was used went dead soon. The occurrence frequency of this phenomenon was likely to increase as the aluminum content increased. According to teardown analysis of the short-life batteries, it was confirmed that needle crystal of zinc oxide (about 1 µm) was deposited in gaps between fibers of the nonwoven fabric separator and penetrated part of the 2-ply separator. Based on the results, the mechanism of early exhaustion of batteries in the low rate discharge is assumed as follows.

At low temperature, zincate ions show low solubility to the alkaline electrolyte. When the low rate discharge is continued in this environment, the zincate ions produced by the following chemical formula (2) are continuously supplied to supersaturate the electrolyte. As a result, redeposition of the zincate ions occurs in the manner expressed by the chemical formula (3). In the battery using the zinc alloy powder containing an increased amount of aluminum, a protective aluminum oxide layer has densely been formed on the surface of the zinc powder. Therefore, the zincate ions are less likely to redeposit on the zinc powder (negative electrode). Instead, zinc oxide as a semiconductor is redeposited on the separator. This seems to be a cause of the internal short circuit.

### <Discharge reaction of negative electrode>

Zn + 2OH⁻ → ZnO + H₂O + 2e⁻ (1)

Zn + 4OH⁻ → Zn(OH)₄²⁻ + 2e⁻ (2)

### <Redeposition>

Zn(OH)₄²⁻→ ZnO + H₂O + 2OH⁻ (3)

Even if the aluminum content in the zinc alloy was 0.008 wt% or more, batteries F1-S1 in which the 3-ply separator was used to increase the total separator thickness and improve isolation between the electrodes were not exhausted soon under the discharge condition (d). Therefore, it is assumed that the internal short circuit is avoidable by the isolation capability of the separator.

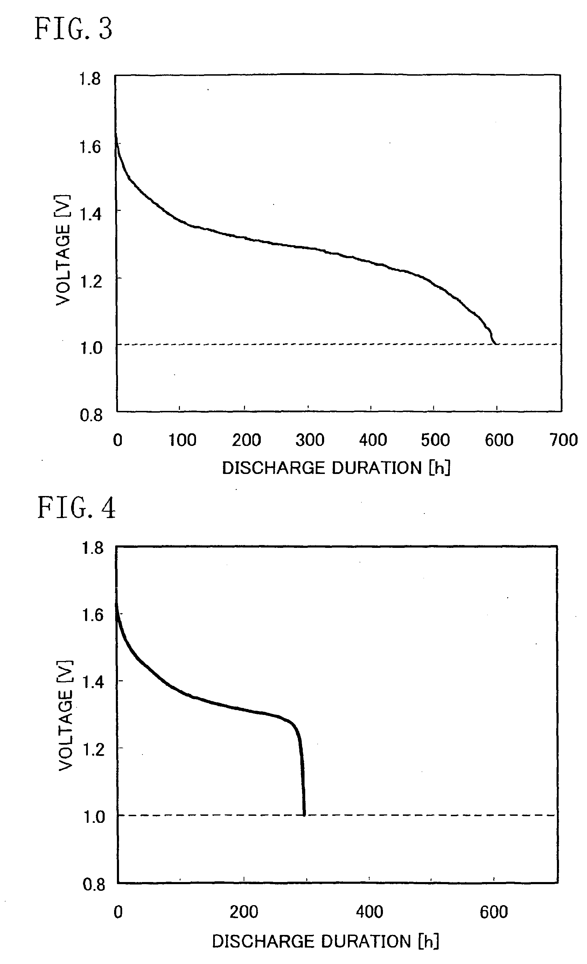

FIG. **3** shows a relationship between voltage and discharge duration of batteries A1 which showed excellent performance in the discharge condition (d) of the low rate discharge test (ii). FIG. **4** shows a relationship between voltage and discharge duration of some of batteries J2 which went dead soon in the same test. Batteries A1 were very long-life batteries as they showed a voltage 1.0 V or more even after 500-hour continuous discharge. In contrast, batteries J2 showed sharp voltage drop to less than 1.0 V after about 300-hour discharge. In the low rate discharge test (ii) under the condition (d), whether the batteries go dead soon or not was judged based on whether or not the batteries were able to discharge continuously for 500 hours or more before the voltage drop to 1.0 V.

According to the results of the high rate discharge test (iii) shown in Table 4, batteries Q1-S1 and Q2-S2 in which the aluminum content in the zinc alloy was increased up to 0.025 wt% were likely to impair the characteristics (shorten the discharge duration). Although the cause of the phenomenon is still unclear, it is considered that the excessive aluminum content promotes passivation of zinc at the end stage of the discharge.

From the above-described results, if a negative electrode prepared by dispersing zinc alloy powder containing 0.008-0.02 wt% of aluminum in an adequately viscous gelled electrolyte (in which the content of the cross-linked water-absorbing polyacrylate polymer as the gelling agent is 0.5-3 wt%) is used and the isolation by the separator is adequately ensured (a stack of three 150 µm-thick nonwoven fabric sheets is used), the obtained battery shows great resistance to leakage and long life in the low rate discharge and high rate discharge even if the indium content in the zinc alloy is as extremely low as 0.015 wt% or less. Batteries F1-O1 are examples of the excellent alkaline dry batteries according to the present embodiment.

### (Example 2)

Close study has been made on thickness, sheet count and winding number of the nonwoven fabric separator.

To a predetermined amount of the gelled electrolyte used in Example 1, a negative electrode active material t (Al: 0.020 wt%, Bi: 0.015 wt%, In: 0.0001 wt%) in an amount of 1.8-times by weight was added and sufficiently mixed to prepare a gelled negative electrode T. The positive electrode mixture pellets used in Example 1 were used as the positive electrode.

As separator components, five kinds of vinylon-Lyocell composite nonwoven fabric sheets having different thicknesses of (1) 120 µm, (2) 150 µm, (3) 180 µm, (4) 200 µm and (5) 220 µm were prepared. After adjustment of size and the like, separators were prepared in accordance with the sheet count and the winding number shown in Table 6 and each of the separators was inserted in the positive electrode mixture pellets together with and an insulating cap. Then, an electrolyte (a 36 wt% potassium hydroxide solution containing 2 wt% of ZnO) was poured and the gelled negative electrode T was introduced to fill space inside the separator. Thus, AA alkaline dry batteries 1-18 of different separator structures were obtained. As the obtained batteries were different in total thickness of the separator, the volume of the space to be filled with the gelled negative electrode (space inside the cylindrically wound separator) was varied among the batteries. In this example, the amount of the gelled negative electrode T was adjusted such that the fluid level of the gelled negative electrode became equal (42mm) among the obtained batteries.

**Table 6**

| BATTERY No. | KIND, SHEET COUNT AND WINDING NUMBER OF NONWOVEN FABRIC SHEET | THICKNESS OF ONE NONWOVEN FABRIC SHEET [µm] | TOTAL THICKNESS OF SEPARATOR [µm] |
|---|---|---|---|
| 1 | NONWOVEN FABRIC SHEET (1), 1 × 2-PLY | 120 | 240 |
| 2 | NONWOVEN FABRIC SHEET (2), 1 × 2-PLY | 150 | 300 |
| 3 | NONWOVEN FABRIC SHEET (3), 1 × 2-PLY | 180 | 360 |
| 4 | NONWOVEN FABRIC SHEET (1), 1 × 3-PLY | 120 | 360 |
| 5 | NONWOVEN FABRIC SHEET (4), 1 × 2-PLAY | 200 | 400 |
| 6 | NONWOVEN FABRIC SHEET (5), 1 × 2-PLY | 220 | 440 |
| 7 | NONWOVEN FABRIC SHEET (2), 1 × 3-PLY | 150 | 450 |
| 8 | NONWOVEN FABRIC SHEET (1), 2 × 2-PLY (4-PLY IN TOTAL) | 120 | 480 |
| 9 | NONWOVEN FABRIC SHEET (3), 1 × 3-PLY | 180 | 540 |
| 10 | NONWOVEN FABRIC SHEET (4), 1 × 3-PLY | 200 | 600 |
| 11 | NONWOVEN FABRIC SHEET (2), 2 × 2-PLY (4-PLY IN TOTAL) | 150 | 600 |
| 12 | NONWOVEN FABRIC SHEET (5), 1 × 3-PLY | 220 | 660 |
| 13 | NONWOVEN FABRIC SHEET (3), 2 × 2-PLY (4-PLY IN TOTAL) | 180 | 720 |
| 14 | NONWOVEN FABRIC SHEET (1), 2 × 3-PLY (6-PLY IN TOTAL) | 120 | 720 |
| 15 | NONWOVEN FABRIC SHEET (4), 2 × 2-PLY (4-PLY IN TOTAL) | 200 | 800 |
| 16 | NONWOVEN FABRIC SHEET (5), 2 × 2-PLY (4-PLY IN TOTAL) | 220 | 880 |
| 17 | NONWOVEN FABRIC SHEET (2), 2 × 3-PLY (6-PLY IN TOTAL) | 150 | 900 |
| 18 | NONWOVEN FABRIC SHEET (3), 2 × 3-PLY (6-PLY IN TOTAL) | 180 | 1080 |

For evaluation of the obtained batteries, the leakage resistance test (i) and the low rate discharge test (ii) (under four different conditions (a)-(d)) described in Example 1 were carried out. The high rate discharge test was replaced with (iv) measurement of CCV (closed circuit voltage) in high rate pulse discharge since the batteries 1-18 containing different amounts of the gelled negative electrode could not be evaluated by the high rate discharge test.

### (iv) CCV measurement in high rate pulse discharge

n pieces of each kind of the obtained batteries (n = 3) were connected to a 1 Ω resistance in 20 °C atmosphere for only 100 ms, respectively, to measure CCV in this period by an oscilloscope. A minimum voltage of each of the batteries connected to the 1 Ω resistance in this period (100 ms) was read and an average among the 3 batteries was obtained as a CCV value.

Air permeability (Frajour air permeability) of the separator in the stacked state, i.e., in the actual state in the battery, was measured in order to quantitatively estimate the size of gaps among the separator fibers and insulation between the positive and negative electrodes. For example, to measure the air permeability of a separator of battery 1 in the "stacked state", the measurement is performed on a stack of two nonwoven fabric sheets (1) having a total thickness of 240 µm. For the measurement, an air permeability testing machine FX3300 manufactured by TEXTEST was used. The Frajour air permeability was measured on the separators of batteries 1-18 in dry state corresponding to the "stacked state" by a method according to JIS L1096.8.27.1.A. The evaluation results are shown in Table 7.

**Table 7**

| BATTERY No. | BATTERY CHARACTERISTIC | | | | | | AIR PERMEABILITY OF SEPARATOR IN STACKED STATE [mL/cm2·sec] |
|---|---|---|---|---|---|---|---|
| | (i) RATE OF LEAKAGE [%] | (ii) NUMBER OF SHORT-LIFE BATTERY [PIECE] | | | | (iv) CCV WHEN CONNECTED TO 1 Ω RESISTANCE [V] | |
| | | (a) 75 Ω CONTINUOUS | (b) 1.2 kΩ CONTINUOUS | (c) 3.9 INTERMITTENT | (d) 0°C 300 Ω | | |
| 1 | 0 | 0 | 0 | 0 | 9 | 1.483 | 6.5 |
| 2 | 0 | 0 | 0 | 0 | 7 | 1.484 | 6.0 |
| 3 | 0 | 0 | 0 | 0 | 1 | 1.482 | 5.2 |
| 4 | 0 | 0 | 0 | 0 | 0 | 1.483 | 5.0 |
| 5 | 0 | 0 | 0 | 0 | 0 | 1.482 | 4.7 |
| 6 | 0 | 0 | 0 | 0 | 0 | 1.482 | 4.3 |
| 7 | 0 | 0 | 0 | 0 | 0 | 1.480 | 3.8 |
| 8 | 0 | 0 | 0 | 0 | 0 | 1.483 | 3.8 |
| 9 | 0 | 0 | 0 | 0 | 0 | 1.482 | 3.5 |
| 10 | 0 | 0 | 0 | 0 | 0 | 1.480 | 3.1 |
| 11 | 0 | 0 | 0 | 0 | 0 | 1.481 | 2.5 |
| 12 | 0 | 0 | 0 | 0 | 0 | 1.480 | 2.0 |
| 13 | 0 | 0 | 0 | 0 | 0 | 1.480 | 1.2 |
| 14 | 0 | 0 | 0 | 0 | 0 | 1.481 | 0.9 |
| 15 | 0 | 0 | 0 | 0 | 0 | 1.480 | 0.6 |
| 16 | 0 | 0 | 0 | 0 | 0 | 1.480 | 0.5 |
| 17 | 0 | 0 | 0 | 0 | 0 | 1.445 | 0.3 |
| 18 | 0 | 0 | 0 | 0 | 0 | 1.435 | 0.3 |

In the leakage resistance test (i), every battery did not cause leakage because the aluminum content in the zinc alloy was set as high as 0.02 wt% and the gelled electrolyte of adequate viscosity was used.

In the low rate discharge test (ii), the batteries did not have any problems under the discharge conditions (a)-(c) in the 20°C atmosphere. Under the discharge condition (d) of 0°C and 300 Ω, many of batteries 1 and 2 in which the total separator thickness was less than 360 µm went dead soon (internal short circuit by zinc oxide occurred). In contrast, batteries 3-18 in which the total separator thickness was 360 µm or more hardly caused early exhaustion. As to batteries 3 and 4 having the same separator thickness (360 µm in total), early exhaustion occurred in one of batteries 3, while none of batteries 4 were exhausted soon. With these results in mind, it is assumed that a separator made of a larger number of sheets is preferred because it shows higher isolation between the positive and negative electrodes than a separator made of a smaller number of sheets, even if the total separator thickness is the same. The assumption is supported by the data of air permeability of the separator measured in the stacked state. In order to completely avoid the early exhaustion of the batteries in the discharge condition (d), the air permeability is preferably adjusted to 5 mL/cm²·sec or less.

According to the CCV measurement (iv) in the high rate pulse discharge (connected to the 1Ω resistance), batteries 1-16 in which the total separator thickness was 880 µm or less kept the CCV as high as about 1.48 V, while batteries 17 and 18 in which the total separator thickness was more than 880 µm showed decrease of the CCV. It is assumed that the total separator thickness of more than 880 µm excessively increased the resistance between the positive and negative electrodes. Based on the air permeability of the separator measured in the stacked state, it is preferable to set the air permeability of the separator to 0.5 mL/cm²·sec or more to maintain high CCV in the high rate pulse discharge.

Thus, it is preferable that the total thickness of the nonwoven fabric separator is set within the range of 360 µm to 880 µm both inclusive. It is more preferable that the air permeability of the separator in the stacked state is set within the range of 0.5 mL/cm²·sec to 5 mL/cm²·sec both inclusive. The thus-configured separator makes it possible to restrain the internal short circuit that is likely to occur in the negative electrode using the zinc alloy containing a reduced amount of indium and an increased amount of aluminum in the discharge at low rate and low temperature. Simultaneously, the leakage resistance and high rate discharge characteristic are also enhanced.

According to this example, vinylon-Lyocell composite nonwoven fabric was used as the nonwoven fabric. However, it is assumed that the same effect is obtained if other known nonwoven fabrics, such as vinylon-rayon composite, vinylon-mercerized pulp composite, nylon and hydrophilic polypropylene nonwoven fabrics are used.

### (Example 3)

In this example, a combination of a cellophane film and a nonwoven fabric sheet was used as the separator.

To a predetermined amount of the gelled electrolyte used in Example 1, a negative electrode active material t (Al: 0.020 wt%, Bi: 0.015 wt%, In: 0.0001 wt%) in an amount of 1.8-times by weight was added and sufficiently mixed to prepare a gelled negative electrode T. The positive electrode mixture pellets used in Example 1 were used as the positive electrode.

As separator components, the vinylon-Lyocell composite nonwoven fabric sheets of (1) 120 µm thick and (3) 180 µm thick used in Example 2, and cellophane films having different tensile strengths in the lateral direction of (c1) 20N/15mm, (c2) 30N/15mm, (c3) 40N/15mm and (c4) 50N/15mm (manufactured by Futamura Chemical Co., Ltd., about 30 µm thick) were prepared. The tensile strength was measured according to JIS P8113 using a tensile testing machine RTC-1150A manufactured by ORIENTEC Co., Ltd.

After adjustment of size and the like, the separator components were combined as described in Table 8 to prepare separators and each of the separators was inserted in the positive electrode mixture pellets together with an insulating cap. The cellophane film was stacked on the nonwoven fabric sheet such that the cellophane film comes to the innermost part of the separator (closer to the negative electrode). Then, an electrolyte (a 36 wt% potassium hydroxide solution containing 2 wt% of ZnO) was poured and the gelled negative electrode T was introduced to fill space inside the separator. Thus, AA alkaline dry batteries 21-30 of different structures were obtained. As the obtained batteries are different in total thickness of the separator, the volume of the space to be filled with the gelled negative electrode (space inside the cylindrically wound separator) is varied among the batteries. In this example, the amount of the gelled negative electrode T was adjusted such that the fluid level of the gelled negative electrode became equal (42mm) among the obtained batteries.

For evaluation of the obtained batteries, the leakage resistance test (i), the low rate discharge test (ii) (under four discharge conditions (a)-(d)) and the CCV measurement in the high rate pulse discharge (iv) were carried out. The results are shown in Table 8.

**Table 8**

| BATTERY No. | STRUCTURE OF SEPARATOR | (i) RATE OF LEAKAGE [%] | (ii) NUMBER OF SHORT-LIFE BATTERY [PIECE] | | | | (iv) CCV WHEN CONNECTED TO 1 Ω RESISTANCE [V] |
|---|---|---|---|---|---|---|---|
| | | | (a) 75 Ω CONTINUOUS | (b) 1.2 kΩ CONTINUOUS | (c) 3.9 Ω INTERMITTENT | (d) 0°C 300 Ω | |
| 21 | NONWOVEN FABRIC SHEET (1), 1 × 2-PLY | 0 | 0 | 0 | 0 | 7 | 1.483 |
| 22 | NONWOVEN FABRIC SHEET (1), 1 × 2-PLY + CELLOPHANE FILM (c1), 1 × 1-PLY | 0 | 0 | 0 | 0 | 1 | 1.480 |
| 23 | NONWOVEN FABRIC SHEET (1), 1 × 2-PLY + CELLOPHANE FILM (c2), 1 × 1-PLY | 0 | 0 | 0 | 0 | 0 | 1.483 |
| 24 | NONWOVEN FABRIC SHEET (1), 1 × 2-PLY + CELLOPHANE FILM (c3), 1 × 1-PLY | 0 | 0 | 0 | 0 | 0 | 1.482 |
| 25 | NONWOVEN FABRIC SHEET (1), × 2-PLY + CELLOPHANE FILM (c4), 1 × PLY | 0 | 0 | 0 | 0 | 0 | 1.482 |
| 26 | NONWOVEN FABRIC SHEET (3), 1 × 1-PLY | 0 | 0 | 0 | 0 | 10 | 1.481 |
| 27 | NONWOVEN FABRIC SHEET (3), 1 × 1-PLY + CELLOPHANE FILM (c1), 1 × 1-PLY | 0 | 0 | 0 | 0 | 1 | 1.482 |
| 28 | NONWOVEN FABRIC SHEET (3), 1 × 1-PLY + CELLOPHANE FILM (c2), 1 × 1-PLY | 0 | 0 | 0 | 0 | 0 | 1.483 |
| 29 | NONWOVEN FABRIC SHEET (3), 1 × 1-PLY + CELLOPHANE FILM (c3), 1 × 1-PLY | 0 | 0 | 0 | 0 | 0 | 1.482 |
| 30 | NONWOVEN FABRIC SHEET (1), 1 × 1-FLY + CELLOPHANE (c4), 1 × 1-PLY | 0 | 0 | 0 | 0 | 0 | 1.480 |

In the leakage resistance test (i), every battery did not cause leakage because the aluminum content in the zinc alloy was set as high as 0.02 wt% and the gelled electrolyte of adequate viscosity was used. Further, as the CCV in the high rate pulse discharge (connected to the 1Ω resistance) was maintained as high as about 1.48 V, it is assumed that the high rate characteristics of batteries 21-30 were not varied very much from each other, i.e., they did not present any problem.

In the low rate discharge test (ii), the batteries did not have any problems under the discharge conditions (a)-(c) in the 20°C atmosphere. Under the discharge condition (d) of 0°C and 300 Ω, many of the batteries 21 and 26 went dead soon due to lack of the cellophane film and shortage of the total thickness of the nonwoven fabric sheet. In contrast, in batteries in which a 1-ply cellophane film was stacked on the nonwoven fabric sheet, the early exhaustion was significantly prevented. In particular, with use of the cellophane films (c2), (c3) and (c4) having a tensile strength in the lateral direction of 30N/15mm or more, the internal short circuit caused by zinc oxide was completely avoided.

In this example, the cellophane film was stacked on the nonwoven fabric sheet. However, it is assumed that the same effect is obtained even if the cellophane film is bonded to the nonwoven fabric sheet.

### (Example 4)

In this example, a combination of a hydrophilic polyolefin film and a nonwoven fabric sheet was used as the separator.

To a predetermined amount of the gelled electrolyte used in Example 1, a negative electrode active material t (Al: 0.020 wt%, Bi: 0.015 wt%, In: 0.0001 wt%) in an amount of 1.8-times by weight was added and sufficiently mixed to prepare a gelled negative electrode T. The positive electrode mixture pellets used in Example 1 were used as the positive electrode.

As separator components, the vinylon-Lyocell composite nonwoven fabric sheets of (1) 120 µm thick and (3) 180 µm thick used in Example 2, and polyethylene films which are graft-polymerized with acrylic acid and have different tensile strengths in the lateral direction of (a1) 10N/15mm, (a2) 20N/15mm, (a3) 30N/15mm and (a4) 35N/15mm (all of them were manufactured by NITTO DENKO CORPORATION, 25-75 µm thick) were prepared. The acrylic acid graft-polymerized polyethylene films are hydrophilic microporous films.

Further, a 35 µm thick polyethylene film manufactured by Mitsui Chemicals was sulfonated by the following manner to prepare sulfonated polyethylene films having different tensile strengths in the lateral direction of (s1) 10N/15mm, (s2) 20N/15mm, (s3) 30N/15mm and (s4) 35N/15mm. The sulfonated polyethylene films are also hydrophilic microporous films.

### <Sulfonation>

1. The surface of the polyethylene film was treated with "Emulgen 709" manufactured by Kao Corporation to give wettability thereto.
2. The film obtained in step 1 was immersed in 20 wt% fuming sulfuric acid at 60 °C to introduce a sulfone group. Treatment time was adjusted in the range of 2-20 minutes to obtain intended tensile strength.
3. The film obtained in step 2 was alkali-washed with a 0.1 wt% KOH solution and further washed with water to remove excessive ions. Then, the film was dried in vacuum at 30°C for 24 hours to obtain a sulfonated polyethylene film.

Subsequently, after adjustment of size and the like, the separator components were combined as described in Table 9 to prepare separators and each of the separators was inserted in the positive electrode mixture pellets together with an insulating cap. The acrylic acid graft-polymerized polyethylene film or the sulfonated polyethylene film was stacked on the nonwoven fabric sheet such that it comes to the innermost part of the separator (closer to the negative electrode). Then, an electrolyte (a 36 wt% potassium hydroxide solution containing 2 wt% of ZnO) was poured and the gelled negative electrode T was introduced to fill space inside the separator. Thus, AA alkaline dry batteries 31-48 were obtained. As the obtained batteries are different in total thickness of the separator, the volume of the space to be filled with the gelled negative electrode (space inside the cylindrically wound separator) is varied among the batteries. In this example, the amount of the gelled negative electrode T was adjusted such that the fluid level of the gelled negative electrode became equal (42mm) among the obtained batteries.

For evaluation of the obtained batteries, the leakage resistance test (i), the low rate discharge test (ii) (under four discharge conditions (a)-(d)) and the CCV measurement in high rate pulse discharge (ii) were carried out. The results are shown in Table 9.

**Table 9**

| BATTERY No. | STRUCTURE OF SEPARATOR | (i) RATE OF LEAKAGE [%] | (ii) NUMBER OF SHORT-LIFE BATTERY [PIECE] | | | | (iv) CCV WHEN CONNECTED TO 1 Ω [V] |
|---|---|---|---|---|---|---|---|
| | | | (a) 75 Ω CONTINUOUS | (b) 1.2 kΩ CONTINUOUS | (c) 3.9 Ω INTERMITTENT | (d) 0°C300 Ω | |
| 31 | NONWOVEN FABRIC SHEET (1), 1 × 2-PLY | 0 | 0 | 0 | 0 | 7 | 1.483 |
| 32 | NONWOVEN FABRIC SHEET (1), 1 × 2-PLY + GRAFT PE FILM (a1) 1 × 1-PLY | 0 | 0 | 0 | 0 | 1 | 1.482 |
| 33 | NONWOVEN FABRIC SHEET (1), 1 × 2-PLY + GRFT PE FILM (a2) 1 × 1-PLY | 0 | 0 | 0 | 0 | 1 | 1.480 |
| 34 | NONWOVEN FABRIC SHEET (1), 1 × 2-PLY + GRAFT PE FILM (a3) 1 × 1-PLY | 0 | 0 | 0 | 0 | 0 | 1.482 |
| 35 | NONWOVEN FABRIC SHEET (1), 1 × 2-PLY + GRAFT PE FILM (a4) 1 × 1-PLY | 0 | 0 | 0 | 0 | 0 | 1.482 |
| 36 | NONWOVEN FABRIC SHEET (1), 1 × 2-PLY + SULFONATED PE FILM (s1) × 1-PLY | 0 | 0 | 0 | 0 | 1 | 1.480 |
| 37 | NONWOVEN FABRIC SHEET (1), 1 × 2-PLY + SULFONATED PE FILM (s2) 1 × 1-PLY | 0 | 0 | 0 | 0 | 1 | 1.480 |
| 38 | NONWOVEN FABRIC SHEET (1), 1 × 2-PLY + SULFONATED PE FILM (s3) 1× 1-PLY | 0 | 0 | 0 | 0 | 0 | 1.481 |
| 39 | NONWOVEN FABRIC SHEET (1), 1 × 2-PLY + SULFONATED PE FILM (s4) 1 × 1-PLY | 0 | 0 | 0 | 0 | 0 | 1.482 |
| 40 | NONWOVEN FABRIC SHEET (3), 1 × 1-PLY | 0 | 0 | 0 | 0 | 10 | 1.481 |
| 41 | NONWOVEN FABRIC SHEET (3), 1 × 1-PLY + GRAFT PE FILM (a1) 1 × 1-PLY | 0 | 0 | 0 | 0 | 1 | 1.482 |
| 42 | NONWOVEN FABRIC SHEET (3), 1 × 1-PLY + GRAFT FILM (a2) 1 × 1-PLY | 0 | 0 | 0 | 0 | 1 | 1.482 |
| 43 | NONWOVEN FABRIC SHEET (3), 1 × 1-PLY + GRAFT PE FILM (a3) 1 × 1-PLY | 0 | 0 | 0 | 0 | 0 | 1.480 |
| 44 | NONWOVEN FABRIC SHEET (3), 1 × 1-PLY + GRAFT PE FILM (a4) 1 × 1-PLY | 0 | 0 | 0 | 0 | 0 | 1.481 |
| 45 | NONWOVEN FABRIC SHEET (3), 1 × 1-PLY + SULFONATED PE FILM (s1) 1 × 1-PLY | 0 | 0 | 0 | 0 | 2 | 1.480 |
| 46 | NONWOVEN FABRIC SHEET (3), 1 × 1-PLY + SULFONATED PE FILM (s2) 1 × 1-PLY | 0 | 0 | 0 | 0 | 1 | 1.483 |
| 47 | NONWOVEN FABRIC SHEET (3), 1 × 1-PLY + SULFONATED PE FILM(s3) 1 × 1-PLY | 0 | 0 | 0 | 0 | 0 | 1.483 |
| 48 | NONWOVEN FABRIC SHEET (3), 1 × 1-PLY + SULFONATED PE FILM (s4) 1 × 1-PLY | 0 | 0 | 0 | 0 | 0 | 1.480 |

In the leakage resistance test (i), every battery did not cause leakage because the aluminum content in the zinc alloy was set as high as 0.02 wt% and a gelled electrolyte of adequate viscosity was used. Further, as the CCV in the high rate pulse discharge (connected to the 1 Ω resistance) was maintained as high as about 1.48 V, it is assumed that the high rate characteristics of batteries 31-48 were not varied very much from each other, i.e., they did not present any problem.

In the low rate discharge test (ii), the batteries did not have any problems under the discharge conditions (a)-(c) in the 20°C atmosphere. Under the discharge condition (d) of 0°C and 300 Ω, many of the batteries 31 and 40 in which only the nonwoven fabric sheet was used as the separator went dead soon due to lack of the total thickness of the nonwoven fabric sheet. In contrast, in batteries in which a 1-ply acrylic acid graft-polymerized polyethylene film or sulfonated polyethylene film was stacked on the nonwoven fabric sheet, the early exhaustion was significantly restrained. In particular, with use of the acrylic acid graft-polymerized polyethylene films (a3) and (a4) and the sulfonated polyethylene films (s3) and (s4) having a tensile strength in the lateral direction of 30N/15mm or more, the internal short circuit caused by zinc oxide was completely avoided.

In this example, the acrylic acid graft-polymerized polyethylene film or the sulfonated polyethylene film was stacked on the nonwoven fabric sheet. However, it is assumed that the same effect is obtained even if the acrylic acid graft-polymerized polyethylene film or the sulfonated polyethylene film is bonded to the nonwoven fabric sheet. Further, almost the same effect is obtained if the acrylic acid graft-polymerized polyethylene film or the sulfonated polyethylene film used herein is replaced with another polyolefin film as long as it has hydrophilicity and micropores.

### (Example 5)

In this example, a study has been made on the bismuth content in the zinc alloy.

A zinc ingot of 99.99 % purity or more was fused at a temperature higher than 500 °C. Additive elements were added thereto in the composition ratio shown in Table 10 and the mixture was uniformly fused to obtain a liquid zinc alloy. Then, the liquid zinc alloy was powdered by spraying (atomizing) using high pressure gas to obtain zinc alloy powder. The obtained zinc alloy powder was sifted to obtain 35-300 mesh powder (the ratio of fine powder of 75 µm or less: 25 %). In this manner, negative electrode active materials B-a to B-k were obtained.

**Table 10**

| NEGATIVE ELECTRODE ACTIVE MATERIAL | CONTENTS OF ADDITIVES IN ZINC ALLOY [wt%] | | |
|---|---|---|---|
| | Al | Bi | In |
| B-a | 0.010 | 0 | 0.0001 |
| B-b | 0.010 | 0.003 | 0.0001 |
| B-c | 0.010 | 0.005 | 0.0001 |
| B-d | 0.010 | 0.010 | 0.0001 |
| B-e | 0.010 | 0.020 | 0.0001 |
| B-f | 0.010 | 0. 030 | 0.0001 |
| B-g | 0.010 | 0.040 | 0.0001 |
| B-h | 0.010 | 0 | 0.015 |
| B-i | 0.010 | 0.003 | 0.015 |
| B-j | 0.010 | 0.020 | 0.015 |
| B-k | 0.010 | 0. 040 | 0.015 |

To a predetermined amount of the gelled electrolyte used in Example 1, each of the negative electrode active materials in an amount of 1.8-times by weight was added and sufficiently mixed to prepare gelled negative electrodes based on different negative electrode active materials. The positive electrode mixture pellets used in Example 1 were used as the positive electrode. Three vinylon-Lyocell composite nonwoven fabric sheets (thickness of a sheet: 150 µm) were stacked and wound in one to prepare the separator and the separator was inserted in the positive electrode mixture pellets together with an insulating cap. Then, an electrolyte (a 36 wt% potassium hydroxide solution containing 2 wt% of ZnO) was poured and the gelled negative electrode was introduced to fill space inside the separator. In this manner, AA alkaline dry batteries C-a to C-k were obtained.

The thus obtained alkaline dry batteries were evaluated by the tests (i)-(iii) in the same manner as done in Example 1. The evaluation results are shown in Table 11. The results of the 1000 mW continuous discharge carried out as the test (iii) are indicated relative to the discharge duration of batteries A1 of Example 1 standardized as 100.

**Table 11**

| BATTERY No. | BATTERY CHARACTERISTIC | | | | | |
|---|---|---|---|---|---|---|
| | (i) RATE OF LEAKAGE [%] | (ii) NUMBER OF SHORT-LIFE BATTERY [PIECE] | | | | (iii) 1000 mW CONTINUOUS DISCHARGE [INDEX] |
| | | (a) 75 Ω CONTINUOUS | (b) 1.2 kΩ CONTINUOUS | (c) 3.9 Ω INTERMITTENT | (d) 0°C 300 Ω | |
| C-a | 30 | 0 | 0 | 0 | 0 | 101 |
| C-b | 20 | 0 | 0 | 0 | 0 | 100 |
| C-c | 0 | 0 | 0 | 0 | 0 | 100 |
| C-d | 0 | 0 | 0 | 0 | 0 | 101 |
| C-e | 0 | 0 | 0 | 0 | 0 | 99 |
| C-f | 0 | 0 | 0 | 0 | 0 | 99 |
| C-g | 0 | 0 | 0 | 0 | 0 | 87 |
| C-h | 0 | 0 | 0 | 0 | 0 | 100 |
| C-i | 0 | 0 | 0 | 0 | 0 | 101 |
| C-j | 0 | 0 | 0 | 0 | 0 | 100 |
| C-k | 0 | 0 | 0 | 0 | 0 | 85 |

As the total thickness of the nonwoven fabric separator was in the appropriate range, the batteries did not have any problems in the low rate continuous discharge test (ii). In the leakage resistance test (i), batteries C-h to C-k in which the indium content in the zinc alloy was 0.015 wt% did not cause leakage irrespective of the bismuth content. Among batteries C-a to C-g in which the indium content in the zinc alloy was 0.0001 wt%, batteries C-a and C-b in which the bismuth content was less than 0.005 wt% caused leakage. In the high rate discharge test (iii), batteries C-g and C-k in which the bismuth content in the zinc alloy was more than 0.03 wt% were likely to deteriorate the characteristics. From these results, the bismuth content in the zinc alloy is preferably set within the range of 0.005-0.03 wt%.

### (Example 6)

In this example, a study has been made on the contents of sodium ions and sulfate ions contained in electrolytic manganese dioxide.

Electrolytic manganese dioxide HH-PF for alkaline dry battery (MnO₂ purity: 91 wt% or more) manufactured by Tosoh Corporation was added to a 5 wt% sulfuric acid solution at 60 °C to obtain slurry in a concentration of 100g/L. Then, the slurry was stirred at 50°C for an hour and electrolytic manganese dioxide was extracted out by filtration. Then, the extract was washed with water, neutralized with a sodium hydroxide solution, washed again with water and then air-dried at 90 °C for 2 hours. In this process, electrolytic manganese dioxide D-a to D-e different from each other in sodium ion content and sulfate ion content as shown in Table 12 were obtained by varying the conditions of neutralization with the sodium hydroxide solution and water washing.

For measurement of the sodium ion content and the sulfate ion content, a nitric acid solution was added to electrolytic manganese dioxide and the mixture was heated to completely dissolve electrolytic manganese dioxide. The thus prepared solution was analyzed using an ICP optical emission spectrometer (VISTA-RL, VARIAN).

**Table 12**

| ELECTROLYTIC MANGANESE DIOXIDE | CONTENTS OF IMPURITIES IN ELECTROLYTIC MANGANESE DIOXIDE [wt%] | |
|---|---|---|
| | Na⁺ | SO₄²⁻ |
| D-a | 0.2 | 1.0 |
| D-b | 0.5 | 1.0 |
| D-c | 0.8 | 1.0 |
| D-d | 0.2 | 1.5 |
| D-e | 0.2 | 1.8 |

Electrolytic manganese dioxide obtained in the foregoing manner and graphite were mixed in the ratio of 94:6 by weight. To 100 parts by weight of the powder mixture, 1 part by weight of an electrolyte (a 36 wt% potassium hydroxide solution containing 2 wt% of ZnO) was mixed and uniformly stirred with a mixer to make the particle size uniform and the obtained particles are pressed into hollow cylindrical form. Thus, positive electrode mixture pellets based on different kinds of electrolytic manganese dioxide were prepared. Graphite used herein was SP-20 manufactured by Nippon Graphite Industries, ltd.

To a predetermined amount of the gelled electrolyte used in Example 1, a negative electrode active material t (Al: 0.020 wt%, Bi: 0.015 wt%, In: 0.0001 wt%) in an amount of 1.8-times by weight was added and sufficiently mixed to prepare a gelled negative electrode T. Three vinylon-Lyocell composite nonwoven fabric sheets (thickness of a sheet: 150 µm) were stacked and wound in one to prepare the separator and the separator was inserted in the positive electrode mixture pellets together with an insulating cap. Then, an electrolyte (a 36 wt% potassium hydroxide solution containing 2 wt% of ZnO) was poured and the gelled negative electrode was introduced to fill space inside the separator. Thus, AA alkaline dry batteries E-a to E-e based on different kinds of electrolytic manganese dioxide were obtained.

The thus obtained alkaline dry batteries were evaluated by the tests (i)-(iii) in the same manner as done in Example 1. The evaluation results are shown in Table 13. The results of 1000 mW continuous discharge carried out in the test (iii) are expressed as values relative to the discharge duration of batteries A1 of Example 1 standardized as 100.

**Table 13**

| BATTERY No. | BATTERY CHARACTERISTIC | | | | | |
|---|---|---|---|---|---|---|
| | (i) RATE OF LEAKAGE [%] | (ii) NUMBER OF SHORT-LIFE BATTERY [PIECE] | | | | (iii) 1000 mW CONTINUOUS DISCHARGE [INDEX] |
| | | (a) 75 Ω CONTINUOS | (b) 1.2 k Ω CONTINUOUS | (c) 3.9 Ω INTERMITTENT | (d) 0°C 300 Ω | |
| E-a | 0 | 0 | 0 | 0 | 0 | 101 |
| E-b | 0 | 0 | 0 | 0 | 0 | 100 |
| E-c | 0 | 0 | 0 | 0 | 2 | 100 |
| E-d | 0 | 0 | 0 | 0 | 0 | 101 |
| E-e | 0 | 0 | 0 | 0 | 3 | 100 |

In the leakage resistance test (i), every battery did not cause leakage because the aluminum content in the zinc alloy was set as high as 0.02 wt% and the gelled electrolyte of adequate viscosity was used. In the high rate discharge test (iii), every battery maintained high voltage.

In the low rate discharge test (ii), the batteries did not have any problems under the discharge conditions (a)-(c) in the 20°C atmosphere. Under the discharge condition (d) of 0 °C and 300 Ω, some of batteries E-c in which the sodium ion content in electrolytic manganese dioxide was more than 0.5 wt% and some of batteries E-e in which the sulfate ion content in electrolytic manganese dioxide was more than 1.5 wt% caused internal short circuit. A possible cause of this phenomenon is as follows.

If the sodium ion content is high, the sodium ions leach into a KOH-based electrolyte in the battery and the activity of hydroxide ions is decreased. As a result, the solubility of zinc oxide to the electrolyte is reduced. Further, if the sulfate ion content is high, residues of protons mixed as counter ions decrease the alkali concentration of the electrolyte (hydroxide ion concentration). Also in this case, the solubility of zinc oxide to the electrolyte is reduced. In this situation, it is assumed that internal short circuit is likely to occur due to redeposition of zinc oxide in the discharge period at low rate and low temperature.

From the foregoing results, sodium ions and sulfate ions contained in the electrolytic manganese dioxide as impurities are preferably controlled to 0.5 wt% or less and 1.5 wt% or less, respectively.

In this example, commercially available electrolytic manganese dioxide was subjected to sulfuric acid treatment, neutralization with a sodium hydroxide solution and water washing to adjust the contents of sodium ions and sulfate ions. In practice, it is presumably most preferable to adjust the sodium ion content to 0.5 wt% or less and the sulfate ion content to 1.5 wt% or less in the process of manufacturing the electrolytic manganese dioxide, i.e., in the process of electrolysis in a sulfuric acid bath, pulverization and neutralization with a sodium hydroxide solution.

In Examples 5 and 6, a stack of three vinylon-Lyocell composite nonwoven fabric sheets (thickness of a sheet: 150 µm) wound in one was used as the separator in the battery. The same effect obtained herein is also obtained even if the separator is made of any kind of nonwoven fabric sheets as long as the total separator thickness is in the range of 360-880 µm. Further, the separator may be made of a stack of a nonwoven fabric sheet of any kind and a cellophane film or a stack of a nonwoven fabric sheet of any kind and a hydrophilic polyolefin film.

In Examples 1 to 6, the particle size of the negative electrode active material was controlled to 35-300 mesh (the ratio of fine powder of 75 µm or less: 25 %). However, the present invention is not limited thereto. The present invention can be applied to alkaline dry batteries using zinc alloy powder of any particle size as the negative electrode active material.

In Examples 1 to 6, AA alkaline dry batteries were prepared for evaluation. However, the present invention offers the same effect even if the invention is applied to alkaline dry batteries of other sizes. Further, the same effect is also expected even if the invention is applied to alkaline dry batteries using a mixture of manganese dioxide and nickel oxyhydroxide as the positive electrode active material (nickel-based dry batteries).

According to the present invention, highly reliable alkaline dry batteries which offer great resistance to leakage and other battery characteristics in balance are provided at low cost.

The alkaline dry battery according to the present invention has excellent resistance to leakage and favorable discharge characteristics and does not cause internal short circuit even in a discharge period at low rate and low temperature. Therefore, the alkaline dry battery of the present invention delivers its performance with stability even when it is applied to various electronic devices and general purpose devices, as well as a headlight which may be continuously used outside in wintertime and a battery-powered refrigerant deodorant.

## Claims

1. An alkaline dry battery comprising a positive electrode, a negative electrode and a separator, wherein
the negative electrode contains a zinc alloy as a negative electrode active material and a gelled alkaline electrolyte as a dispersion medium,
the zinc alloy contains 0.0001 wt% to 0.015 wt% both inclusive of indium and 0.008 wt% to 0.02 wt% both inclusive of aluminum,
the gelled alkaline electrolyte contains 0.5 wt% to 3 wt% both inclusive of cross-linked water-absorbing polyacrylate polymer as a gelling agent,
the separator is a single nonwoven fabric sheet or a stack of multiple nonwoven fabric sheets and has a thickness of 360 µm to 880 µm both inclusive,
wherein
the positive electrode contains electrolytic manganese dioxide or a mixture of electrolytic manganese dioxide and nickel oxyhydroxide as a positive electrode active material and
the electrolytic manganese dioxide contains 0.5 wt% or less of sodium ions and 1.5 wt% or less of sulfate ions

2. The alkaline dry battery of claim 1, wherein the separator has air permeability of 0.5 mL/cm²·sec to 5 mL/cm²·sec both inclusive.

3. The alkaline dry battery of claim 1, wherein the zinc alloy contains 0.005 wt% to 0.03 wt% both inclusive of bismuth.

4. An alkaline dry battery comprising a positive electrode, a negative electrode and a separator, wherein
the negative electrode contains a zinc alloy as a negative electrode active material and a gelled alkaline electrolyte as a dispersion medium,
the zinc alloy contains 0.0001 wt% to 0.015 wt% both inclusive of indium and 0.008 wt% to 0.02 wt% both inclusive of aluminum,
the gelled alkaline electrolyte contains 0.5 wt% to 3 wt% both inclusive of cross-linked water-absorbing polyacrylate polymer as a gelling agent,
the separator is a stack of a nonwoven fabric sheet and a cellophane film,
wherein
the positive electrode contains electrolytic manganese dioxide or a mixture of electrolytic manganese dioxide and nickel oxyhydroxide as a positive electrode active material and
the electrolytic manganese dioxide contains 0.5 wt% or less of sodium ions and 1.5 wt% or less of sulfate ions.

5. The alkaline dry battery of claim 4, wherein the cellophane film has a tensile strength of 30 N/15 mm or more.

6. The alkaline dry battery of claim 4, wherein the zinc alloy contains 0.005 wt% to 0.03 wt% both inclusive of bismuth.

7. An alkaline dry battery comprising a positive electrode, a negative electrode and a separator, wherein
the negative electrode contains a zinc alloy as a negative electrode active material and a gelled alkaline electrolyte as a dispersion medium,
the zinc alloy contains 0.0001 wt% to 0.015 wt% both inclusive of indium and 0.008 wt% to 0.02 wt% both inclusive of aluminum,
the gelled alkaline electrolyte contains 0.5 wt% to 3 wt% both inclusive of cross-linked water-absorbing polyacrylate polymer as a gelling agent,
the separator is a stack of a nonwoven fabric sheet and a hydrophilic microporous polyolefin film
wherein
the positive electrode contains electrolytic manganese dioxide or a mixture of electrolytic manganese dioxide and nickel oxyhydroxide as a positive electrode active material and
the electrolytic manganese dioxide contains 0.5 wt% or less of sodium ions and 1.5 wt% or less of sulfate ions.

8. The alkaline dry battery of claim 7, wherein the hydrophilic microporous polyolefin film has a tensile strength of 30 N/15 mm or more.

9. The alkaline dry battery of claim 7, wherein the zinc alloy contains 0.005 wt% to 0.03 wt% both inclusive of bismuth.

## Patentansprüche

1. Alkali-Trockenbatterie, die eine positive Elektrode, eine negative Elektrode und einen Separator umfasst, wobei
die negative Elektrode eine Zink-Legierung als ein aktives Material der negativen Elektrode und ein Gel-Alkali-Elektrolyt als ein Dispersionsmedium enthält,
die Zinklegierung von einschließlich 0,0001 Gew.-% bis einschließlich 0,015 Gew.-% Indium sowie von einschließlich 0,008 Gew.-% bis einschließlich 0,02 Gew.-% Aluminium enthält,
das Gel-Alkali-Elektrolyt von einschließlich 0,5 Gew.-% bis einschließlich 3 Gew.-% vernetztes, wasserabsorbierendes Polyacrylat-Polymer als ein Geliermittel enthält,
der Separator ein einzelne Vliesbahn oder eine Schichtanordnung mehrerer Vliesbahnen ist und eine Dicke von einschließlich 360 µm bis einschließlich 880 µm hat,
wobei
die positive Elektrode elektrolytisches Mangandioxid oder ein Gemisch aus elektrolytischem Mangandioxid und Nickeloxyhydroxid als ein aktives Material der positiven Elektrode enthält, und
das elektrolytische Mangandioxid 0,5 Gew.-% oder weniger Natriumionen und 1,5 Gew.-% oder weniger Sulfationen enthält.

2. Alkali-Trockenbatterie nach Anspruch 1, wobei der Separator eine Luftdurchlässigkeit von einschließlich 0,5 ml/cm²· s bis einschließlich 5 ml/cm² · s aufweist.

3. Alkali-Trockenbatterie nach Anspruch 1, wobei die Zinklegierung von einschließlich 0,005 Gew.-% bis einschließlich 0,03 Gew.-% Wismut enthält.

4. Alkali-Trockenbatterie, die eine positive Elektrode, eine negative Elektrode und einen Separator umfasst, wobei
die negative Elektrode eine Zink-Legierung als ein aktives Material der negativen Elektrode und ein Gel-Alkali-Elektrolyt als ein Dispersionsmedium enthält,
die Zinklegierung von einschließlich 0,0001 Gew.-% bis einschließlich 0,015 Gew.-% Indium sowie von einschließlich 0,008 Gew.-% bis einschließlich 0,02 Gew.-% Aluminium enthält,
das Gel-Alkali-Elektrolyt von einschließlich 0,5 Gew.-% bis einschließlich 3 Gew.-% vernetztes, wasserabsorbierendes Polyacrylat-Polymer als ein Geliermittel enthält,
der Separator eine Schichtanordnung aus einer Vliesbahn und einem Cellophanfilm ist, wobei
die positive Elektrode elektrolytisches Mangandioxid oder ein Gemisch aus elektrolytischem Mangandioxid und Nickeloxyhydroxid als ein aktives Material der positiven Elektrode enthält, und
das elektrolytische Mangandioxid 0,5 Gew.-% oder weniger Natriumionen und 1,5 Gew.-% oder weniger Sulfationen enthält.

5. Alkali-Trockenbatterie nach Anspruch 4, wobei der Cellophanfilm eine Zugfestigkeit von 30 N/15 mm oder mehr hat.

6. Alkali-Trockenbatterie nach Anspruch 4, wobei die Zinklegierung von einschließlich 0,005 Gew.-% bis einschließlich 0,03 Gew.-% Wismut enthält.

7. Alkali-Trockenbatterie, die eine positive Elektrode, eine negative Elektrode und einen Separator umfasst, wobei
die negative Elektrode eine Zink-Legierung als ein aktives Material der negativen Elektrode und ein Gel-Alkali-Elektrolyt als ein Dispersionsmedium enthält,
die Zinklegierung von einschließlich 0,0001 Gew.-% bis einschließlich 0,015 Gew.-% Indium sowie von einschließlich 0,008 Gew.-% bis einschließlich 0,02 Gew.-% Aluminium enthält,
das Gel-Alkali-Elektrolyt von einschließlich 0,5 Gew.-% bis einschließlich 3 Gew.-% vernetztes, wasserabsorbierendes Polyacrylat-Polymer als ein Geliermittel enthält,
der Separator eine Schichtanordnung aus einer Vliesbahn und einem hydrophilen mikroporösen Polyolefin ist,
wobei
die positive Elektrode elektrolytisches Mangandioxid oder ein Gemisch aus elektrolytischem Mangandioxid und Nickeloxyhydroxid als ein aktives Material der positiven Elektrode enthält, und
das elektrolytische Mangandioxid 0,5 Gew.-% oder weniger Natriumionen und 1,5 Gew.-% oder weniger Sulfationen enthält.

8. Alkali-Trockenbatterie nach Anspruch 7, wobei der hydrophile mikroporöse Polyolefinfilm eine Zugfestigkeit 30 N/15 mm oder mehr hat.

9. Alkali-Trockenbatterie nach Anspruch 7, wobei die Zinklegierung von einschließlich 0,005 Gew.-% bis einschließlich 0,03 Gew.-% Wismut enthält.

## Revendications

1. Batterie sèche alcaline comprenant une électrode positive, une électrode négative et un séparateur, dans laquelle:
- l'électrode négative contient un alliage de zinc comme matière active de l'électrode négative, et un électrolyte alcalin gélifié comme milieu de dispersion;
- l'alliage de zinc contient entre 0,0001 % en poids inclus et 0,015 % en poids inclus d'indium, et entre 0,008 % en poids inclus et 0,02 % en poids inclus d'aluminium;
- l'électrolyte alcalin gélifié contient entre 0,5 % en poids inclus et 3 % en poids inclus d'un polymère réticulé de polyacrylate absorbeur d'eau comme agent gélifiant;
- le séparateur est une simple feuille de tissu non tissé ou une pile de multiples feuilles de tissu non tissé et présente une épaisseur comprise entre 360 µm inclus et 880 µm inclus,
dans laquelle:
- l'électrode positive contient du dioxyde de manganèse électrolytique ou un mélange de dioxyde de manganèse électrolytique et d'oxyhydroxyde de nickel comme matière active de l'électrode positive, et
- le dioxyde de manganèse électrolytique contient 0,5 % en poids, ou moins, d'ions sodium, et 1,5 % en poids, ou moins, d'ions sulfate.

2. Batterie sèche alcaline selon la revendication 1, dans laquelle le séparateur présente une perméabilité à l'air comprise entre 0,5 mL/cm²·s inclus et 5 mL/cm²·s inclus.

3. Batterie sèche alcaline selon la revendication 1, dans laquelle l'alliage de zinc contient entre 0,005 % en poids inclus et 0,03 % en poids inclus de bismuth.

4. Batterie sèche alcaline comprenant une électrode positive, une électrode négative et un séparateur, dans laquelle:
- l'électrode négative contient un alliage de zinc comme matière active de l'électrode négative, et un électrolyte alcalin gélifié comme milieu de dispersion;
- l'alliage de zinc contient entre 0,0001 % en poids inclus et 0,015 % en poids inclus d'indium, et entre 0,008 % en poids inclus et 0,02 % en poids inclus d'aluminium;
- l'électrolyte alcalin gélifié contient entre 0,5 % en poids inclus et 3 % en poids inclus d'un polymère réticulé de polyacrylate absorbeur d'eau comme agent gélifiant;
- le séparateur est un empilement d'une feuille de tissu non tissé et d'un film de cellophane,
dans laquelle:
- l'électrode positive contient du dioxyde de manganèse électrolytique ou un mélange de dioxyde de manganèse électrolytique et d'oxyhydroxyde de nickel comme matière active de l'électrode positive, et
- le dioxyde de manganèse électrolytique contient 0,5 % en poids, ou moins, d'ions sodium, et 1,5 % en poids, ou moins, d'ions sulfate.

5. Batterie sèche alcaline selon la revendication 4, dans laquelle le film de cellophane présente une résistance à la traction égale à 30 N/15 mm, ou plus.

6. Batterie sèche alcaline selon la revendication 4, dans laquelle l'alliage de zinc contient entre 0,005 % en poids inclus et 0,03 % en poids inclus de bismuth.

7. Batterie sèche alcaline comprenant une électrode positive, une électrode négative et un séparateur, dans laquelle:
- l'électrode négative contient un alliage de zinc comme matière active de l'électrode négative, et un électrolyte alcalin gélifié comme milieu de dispersion;
- l'alliage de zinc contient entre 0,0001 % en poids inclus et 0,015 % en poids inclus d'indium, et entre 0,008 % en poids inclus et 0,02 % en poids inclus d'aluminium;
- l'électrolyte alcalin gélifié contient entre 0,5 % en poids inclus et 3 % en poids inclus d'un polymère réticulé de polyacrylate absorbeur d'eau comme agent gélifiant;
- le séparateur est un empilement d'une feuille de tissu non tissé et d'un film de polyoléfine microporeux hydrophile,
dans laquelle:
- l'électrode positive contient du dioxyde de manganèse électrolytique ou un mélange de dioxyde de manganèse électrolytique et d'oxyhydroxyde de nickel comme matière active de l'électrode positive, et
- le dioxyde de manganèse électrolytique contient 0,5 % en poids, ou moins, d'ions sodium, et 1,5% en poids, ou moins, d'ions sulfate.

8. Batterie sèche alcaline selon la revendication 7, dans laquelle le film de polyoléfine microporeux hydrophile présente une résistance à la traction égale à 30 N/15 mm, ou plus.

9. Batterie sèche alcaline selon la revendication 7, dans laquelle l'alliage de zinc contient entre 0,005 % en poids inclus et 0,03 % en poids inclus de bismuth.
